(19) Europäisches Patentamt
European Patent Office
Office européen des brevets

(11) Publication number: **0 460 743 A2**

# (12) EUROPEAN PATENT APPLICATION

(21) Application number: **91201322.4**

(51) Int. Cl.[5]: **C08G 67/02**

(22) Date of filing: **30.05.91**

(30) Priority: **01.06.90 NL 9001255**

(43) Date of publication of application:
**11.12.91 Bulletin 91/50**

(84) Designated Contracting States:
**BE DE ES FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **van Broekhoven, Johannes Adrianus**
**Badhuisweg 3**
**NL-1031 CM Amsterdam(NL)**
Inventor: **Miedema, Wiebren Age**
**Badhuisweg 3**
**NL-1031 CM Amsterdam(NL)**

(74) Representative: **Tuijn, Jan Warnaar et al**
**Shell Internationale Research Maatschappij B.V., Patents, Licensing & Trade Marks Division, P.O. Box 302**
**NL-2501 CH The Hague(NL)**

## (54) Preparation of polymers of carbon monoxide with olefinically unsaturated compounds.

(57) Polymers of carbon monoxide with one or more olefinically unsaturated compounds are prepared by contacting the monomers with a suitable catalyst in the presence of hydrogen and one or more aprotic polar diluents having a boiling point below 125 °C in which diluents the polymers are insoluble or virtually insoluble.

EP 0 460 743 A2

The invention relates to a process for the preparation of polymers of carbon monoxide with one or more olefinically unsaturated compounds.

It is known that linear copolymers of carbon monoxide with one or more olefinically unsaturated compounds, in which polymers the units originating from carbon monoxide on the one hand and the units originating from the olefinically unsaturated compounds on the other hand occur in a substantially alternating arrangement, can be prepared by contacting the monomers at an elevated temperature and pressure, in the presence of one or more protic polar diluents having a boiling point below 125 °C in which diluents the polymers are insoluble or virtually insoluble, with a CO/olefin copolymerization catalyst. A suitable catalyst composition comprises, for example, a Group VIII metal compound and a dentate ligand containing at least two phosphorus-, nitrogen- and/or sulphur-containing dentate groups such that the dentate ligand can complex with the Group VIII metal.

As regards the protic polar diluents to be used for polymerisation, preference is given to lower aliphatic alcohols, such as methanol, since it appears that the aforesaid catalyst compositions cause the highest reaction rate in them. Aprotic liquids having a boiling point below 125 °C, such as acetone and tetrahydrofuran, have always been considered less suitable for this purpose, in view of the low reaction rate attained in these liquids.

The use of protic solvents such as methanol, as a diluent, may not always be desirable, and therefore the Applicant has carried out further investigations concerning aprotic potential diluents for the aforesaid polymerization. It has now been found that the activity of the catalyst compositions in aprotic polar liquids having a boiling point below 125 °C can be strongly increased by carrying out the polymerization in the presence of hydrogen. This finding is surprising in view of the fact that earlier investigations of the present polymer preparation established that, when carrying out polymerization in methanol as a diluent, the presence of hydrogen has no effect whatsoever on reaction rate.

The present patent application, therefore, relates to a process for the preparation of polymers of carbon monoxide with one or more olefinically unsaturated compounds, characterized by contacting the monomers at an elevated temperature and pressure and in the presence of hydrogen and one or more aprotic polar diluents having a boiling point below 125 °C in which diluents the polymers are insoluble or virtually insoluble, with a CO/olefin copolymerization catalyst.

Examples of aprotic polar liquids having a boiling point below 125 °C that can be used as diluent in the process of the invention, are aliphatic ketones such as acetone and methyl ethyl ketone, aliphatic carboxylic esters such as methyl acetate, ethyl acetate and methyl propionate, and cyclic esters such as tetrahydrofuran and dioxan. Very favourable results are obtained when using methyl ethyl ketone or tetrahydrofuran as aprotic polar liquid.

The process of the invention is carried out in the presence of hydrogen. The process is preferably carried out at a hydrogen partial pressure of between 1 and 50 bar, and in particular between 3 and 25 bar.

The CO/olefin copolymerization catalyst which should be present, may be any catalyst or catalyst composition which is effective in the copolymerization of carbon monoxide and olefinically unsaturated compounds to linear, alternating polymers. Very suitably, the catalyst is a catalyst composition containing a Group VIII metal and a dentate ligand containing at least two phosphorus-, nitrogen- and/or sulphur-containing dentate groups through which the dentate ligand can form a complex with the Group VIII metal.

In the present patent application, Group VIII metals are understood to be the noble metals ruthenium, rhodium, palladium, osmium, iridium and platinum, as well as the iron group metals iron, cobalt and nickel. In the catalyst compositions used in the process of the invention, the Group VIII metal is preferably chosen from palladium, nickel and cobalt. Particular preference is given to palladium as the Group VIII metal. The Group VIII metal is preferably incorporated the catalyst compositions in the form of a salt of a carboxylic acid, in particular in the form of an acetate.

If a nitrogen dentate ligand is used in the catalyst composition, preference is given to a bidentate ligand of the general formula

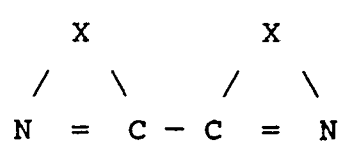

wherein X represents an organic bridging group containing three or four atoms in the bridge, at least two of which are carbon atoms, such as 2,2'-bipyridine and 1,10-phenanthroline. When use is made of a sulphur bidentate ligand in the catalyst composition, preference is given to a bidentate ligand of the general formula $R^1S-R-SR^1$, wherein $R^1$ is an optionally polar-substituted hydrocarbon group and R is a bivalent organic bridging group which has at least two carbon atoms in the bridge, such as 1,2-bis(ethylthio)ethane and cis-1,2-bis-(benzylthio)ethane. Preference is given to catalyst compositions containing phosphorus dentate

ligands, especially bidentate ligands of the general formula $(R^1)_2P$-R-$P(R^1)_2$, wherein R and $R^1$ have the meanings given hereinbefore. Further it is preferred to use such phosphorus bidentate ligands in which $R^1$ represents an aromatic hydrocarbon group having at least one alkoxy substituent in an ortho-position relative to the phosphorus atom to which the aryl group is bound. A compound which is very suitable for the present purpose is 1,3-bis-[bis(2-methoxyphenyl)phosphino]propane. If a nitrogen or sulphur bidentate ligand is used in the catalyst compositions, the applied quantity is preferably 0.5-100 and in particular 1-50 mol per g.atom of Group VIII metal. If a phosphorus bidentate ligand is used, the applied quantity is preferably 0.5-2 and in particular 0.75-1.5 mol per g.atom of Group VIII metal. In addition to a Group VIII metal and a dentate ligand, the catalyst compositions that are used in the process of the invention preferably include an anion of an acid with a pKa of less than 4 and in particular an anion of an acid with a pKa of less than 2. Examples of suitable acids with a pKa of less than 2 are sulphonic acids, such as para-toluenesulphonic acid, and halogen carboxylic acids, such as trifluoroacetic acid. The anion of an acid with a pKa of less than 4 can be incorporated in the catalyst compositions in the form of an acid and/or in the form of a salt, such as a copper or nickel salt. The anion is preferably present in the catalyst compositions in a quantity of 1-100 and in particular 2-50 mol per g.atom of Group VIII metal. Apart from having been added as a separate component, the anion of an acid with a pKa of less than 4 can also be present in the catalyst compositions because, for example, palladium trifluoroacetate or palladium para-tosylate was used as Group VIII metal compound.

In order to increase the activity of catalyst compositions, a 1,4-quinone may be additionally incorporated therein. For this purpose, 1,4-benzoquinone and 1,4-naphthoquinone are very suitable. The quantity of 1,4-quinone used preferably amounts to 5-5,000 and in particular 10-1,000 mol per g.atom of Group VIII metal.

As olefinically unsaturated compounds that according to the invention can be polymerized with carbon monoxide, compounds consisting exclusively of carbon and hydrogen as well as compounds which contain in addition to carbon and hydrogen one or more hetero-atoms are eligible. The process of the invention is preferably applied for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process of the invention is in particular very suitable for the preparation of copolymers of carbon monoxide with ethene and for the preparation of terpolymers of carbon monoxide with ethene and another olefinically unsaturated hydrocarbon, in particular propene.

The quantity of catalyst composition employed in the process of the invention may vary within wide limits. Per mol of olefinically unsaturated compound to be polymerized, the quantity of catalyst composition preferably employed contains $10^{-7}$-$10^{-3}$ and in particular $10^{-6}$-$10^{-4}$ mol of Group VIII metal.

The polymer preparation is preferably carried out at a temperature of 25-150 °C and a pressure of 2-150 bar and in particular at a temperature of 30-130 °C and a pressure of 5-100 bar. The molar ratio of olefinically unsaturated compounds relative to carbon monoxide is preferably 10:1-1:10 and in particular 5:1-1:5.

The invention will now be illustrated with the aid of the following examples:

Example 1

A carbon monoxide/ethene copolymer was prepared as follows. In an autoclave with a capacity of 1.25 1, provided with a stirring device, 600 ml methyl ethyl ketone were introduced. After the contents of the autoclave had been brought to 90 °C, 11 bar carbon monoxide and 38 bar ethene were forced in. Subsequently a solution of catalyst composition was introduced into the autoclave consisting of:

| | |
|---|---|
| 5 ml | acetone, |
| 10 mmol | palladium acetate, |
| 200 mmol | trifluoroacetic acid and |
| 10.5 mmol | 1,3-bis[bis(2-methoxyphenyl)-phosphino]propane. |

Pressure in the autoclave was maintained by injecting a 1:1 carbon monoxide/ethene mixture. After 18 hours polymerization was terminated by cooling to room temperature and releasing the pressure. The copolymer was filtered, washed with methyl ethyl ketone and dried. copolymer quantity obtained was 65 g. Reaction rate was 0.4 kg copolymer/(g palladium.h).

Example 2

A carbon monoxide/ethene copolymer was prepared in substantially the same manner as in Example 1, but with the following differences:

a) 34 bar ethene was forced into the autoclave instead of 38 bar, and additionally 5 bar hydrogen,

b) a solution of catalyst composition was used containing:

| | |
|---|---|
| 2 ml | acetone, |
| 5 mmol | palladium acetate, |

100 mmol trifluoroacetic acid and
5.25 mmol 1,3-bis[bis(2-methoxyphenyl)-phosphino]propane, and

c) reaction time was 7 hours instead of 18 hours. Yield was 98.7 g copolymer. Reaction rate was 2.8 kg copolymer/(g palladium.h).

Example 3

A carbon monoxide/ethene copolymer was prepared in substantially the same manner as in Example 1, but with the following differences:

a) Instead of methyl ethyl ketone, 600 ml tetrahydrofuran was introduced into the autoclave,

b) reaction time was 20 hours instead of 18 hours, and

c) the copolymer was washed with tetrahydrofuran instead of methyl ethyl ketone. Yield was 40 g copolymer. Reaction rate was 0.2 kg copolymer/(g palladium.h).

Example 4

A carbon monoxide/ethene copolymer was prepared in substantially the same manner as in Example 2, but with the following differences:

a) Instead of methyl ethyl ketone, 600 ml tetrahydrofuran was introduced into the autoclave,

b) reaction time was 10 hours instead of 7 hours, and

c) the copolymer was washed with tetrahydrofuran instead of methyl ethyl ketone. Yield was 100 g copolymer. Reaction rate was 2 kg copolymer/(g palladium.h).

Of Examples 1-4, Examples 2 and 4 are in accordance with the invention. In these examples, polymerization was accomplished in the presence of hydrogen and an aprotic polar liquid having a boiling point below 125 °C. Examples 1 and 3 fall outside the scope of the invention and have been included in the patent application for comparison. Although in these examples polymerization was accomplished with the use of an aprotic polar liquid, it was nevertheless in the absence of hydrogen. The favourable influence on reaction rate which occurs when polymerization in accordance with the invention is carried out in the presence of hydrogen is clearly apparent when comparing the results obtained in examples 2 and 4 against examples 1 and 3 respectively. By carrying out polymerization in the presence of hydrogen, reaction rates were obtained that were seven to ten times higher than those in the absence of hydrogen.

With the aid of NMR analysis, it was established that the carbon monoxide/ethene copolymers prepared by Examples 1-4 were made up of linear chains in which the units originating from carbon monoxide on the one hand and the units originating from ethene on the other hand occur in an alternating order.

## Claims

1. Process for the preparation of polymers of carbon monoxide with one or more olefinically unsaturated compounds, characterized by contacting the monomers at an elevated temperature and pressure and in the presence of hydrogen and one or more aprotic polar diluents having a boiling point below 125 °C in which diluents the polymers are insoluble or virtually insoluble, with a CO/olefin copolymerization catalyst.

2. Process as claimed in claim 1, characterized in that methyl ethyl ketone or tetrahydrofuran is used as the aprotic polar diluent.

3. Process as claimed in claim 1 or 2, characterized in that it is carried out at a hydrogen partial pressure of between 1 and 50 bar.

4. Process as claimed in one or more of claims 1-3, characterized in that the catalyst is a composition containing a Group VIII metal and a dentate ligand containing at least two phosphorus-, nitrogen- and/or sulphur-containing dentate groups through which the dentate ligand can form a complex with the Group VIII metal.

5. Process as claimed in claim 4, characterized in that the Group VIII metal in the catalyst composition is incorporated in the form of a salt of a carboxylic acid, such as an acetate.

6. Process as claimed in claim 4 or 5, characterized in that the catalyst composition contains palladium as Group VIII metal, and as dentate ligand a phosphorus bidentate ligand of the general formula $(R^1)_2P\text{-}R\text{-}P(R^1)_2$, wherein $R^1$ represents an optionally polar-substituted hydrocarbyl group and R represents a bivalent organic bridging group which has at least two carbon atoms in the bridge, in a quantity of 0.5-2 mol per g.atom of Group VIII metal.

7. Process as claimed in one or more of claims 4-6, characterized in that the catalyst composition additionally contains an anion of an acid with a pKa of less than 4, in a quantity of 1-100 mol per g.atom of Group VIII metal.

8. Process as claimed in one or more of claims

1-7, characterized in that hydrocarbons such as ethene or a mixture of ethene with another olefinically unsaturated hydrocarbon such as propene are used as olefinically unsaturated compounds.

**9.** Process as claimed in one or more of claims 4-8, characterized in that it is accomplished at a temperature of 25-150 °C, a pressure of 2-150 bar and a molar ratio of olefinically unsaturated compounds to carbon monoxide of from 10:1 to 1:10 and in that per mol of olefinically unsaturated compound to be polymerized a quantity of catalyst composition is used which contains $10^{-7}$-$10^{-3}$ g.atom of Group VIII metal.